(19) Europäisches Patentamt
European Patent Office
Office européen des brevets

(11) **EP 0 562 120 B1**

(12) **EUROPEAN PATENT SPECIFICATION**

(45) Date of publication and mention
of the grant of the patent:
**17.12.1997 Bulletin 1997/51**

(51) Int Cl.6: **G02F 1/136**, G02F 1/133,
H01L 27/12

(21) Application number: **92921210.8**

(22) Date of filing: **12.10.1992**

(86) International application number:
**PCT/JP92/01324**

(87) International publication number:
**WO 93/08499 (29.04.1993 Gazette 1993/11)**

(54) **GRADATIONAL LIQUID CRYSTAL DISPLAY PANEL**

ABGESTUFTES FLÜSSIGKRISTALLANZEIGETAFEL

PANNEAU D'AFFICHAGE MODULABLE A CRISTAUX LIQUIDES

(84) Designated Contracting States:
**DE FR GB NL**

(30) Priority: **14.10.1991 JP 264561/91**

(43) Date of publication of application:
**29.09.1993 Bulletin 1993/39**

(73) Proprietor: **HOSIDEN AND PHILIPS DISPLAY CORPORATION
Hyogo (JP)**

(72) Inventors:
• **UKAI, Yasuhiro 5-4, Kasugadai 8-chome
Nishi-ku
Hyogo 673-02 (JP)**
• **SUNATA, Tomihisa 26-12, Aoyama 3-chome
Shijimicho
Hyogo 673-05 (JP)**
• **INADA, Toshiya Yoropian Nishikigaoka 107
Hyogo (JP)**

(74) Representative:
**Ritter und Edler von Fischern,
Bernhard,Dipl.-Ing. et al
Hoffmann Eitle,
Patent- und Rechtsanwälte,
Postfach 81 04 20
81904 München (DE)**

(56) References cited:
**EP-A- 0 369 621        EP-A- 0 493 798
JP-A- 2 000 012**

## Description

The present invention relates to a gray scale liquid crystal display panel which has each of its pixels composed of a plurality of subpixels and which is capable of providing a gray scale display.

In a liquid crystal display panel disclosed in U.S. Patent No. 4,840,460 each pixel electrode, which faces a common electrode across a liquid crystal interposed therebetween, is divided into a plurality of subpixel electrodes of the same area and control capacitor electrodes are provided each of which has a different area and faces one of the divided subpixel electrodes across an insulating layer sandwiched therebetween. The control capacitor electrodes in each pixel are interconnected electrically. Each control capacitor electrode and the subpixel electrode disposed opposite it across the insulating layer constitute a control capacitor, and the subpixel electrode and the common electrode facing it across the liquid crystal constitute a liquid crystal capacitor. These two capacitors are connected in series to each other. A drive voltage which is applied to a control electrode is divided by the two capacitors. The liquid crystal capacitors have the same capacity but all the control capacitors have different capacities. On this account, even if a voltage is applied to all the control capacitor electrodes in common to them, the liquid crystal capacitors are each supplied with a different capacitance-divided voltage. The threshold voltage of the liquid crystal (i.e. a voltage which is applied to the liquid crystal when the transmission of light through the liquid crystal display panel begins) is substantially constant all over the display panel. Hence, by controlling the voltage which is applied to the control capacitor electrodes, it is possible to control the numbers of subpixel electrodes from which capacitance-divided voltages higher and lower than the threshold voltage, respectively, are applied to the liquid crystal, and consequently, the divided regions of the pixel can be driven stepwise.

In the case of applying the liquid crystal display panel to a picture display including a gray level as in television, the drive voltage that is applied to each pixel of the liquid crystal display may take various values or magnitudes within a certain voltage range in accordance with the picture signal level. In a liquid crystal display panel of the type wherein each pixel is not divided into subpixels, as the drive voltage increases, a gray-level display is produced through utilization of a sloping range of a light transmittance curve from the rise to saturation of the transmittance of each pixel region. In the slope region of the light transmittance curve liquid crystal molecules are oriented obliquely to the substrate. Since the visual angle dependence of the light transmittance is large in this case, a proper angle of field for such a liquid crystal display panel is appreciably small in general.

In the conventional liquid crystal display panel wherein each pixel is composed of a plurality of subpixels and the subpixels are supplied with voltages which differ in a sequential order as described in the aforementioned U.S. patent, however, the transmission of light through one subpixel region reaches saturation through the above-mentioned sloping range of the transmittance curve after starting as the drive voltage is increased, and then the transmission of light through another subpixel region similarly reaches saturation through the sloping range. In this way, the respective subpixel regions reach the saturation range through the sloping range of the light transmittance curve one after another. Hence, in the state of providing a display at an arbitrary gray level, the liquid crystal molecules are oriented obliquely to the substrate in one subpixel region at most but in the other subpixel regions the liquid crystal molecules are oriented vertically or horizontally to the substrate. By decreasing the number of subpixel regions in which the liquid crystal molecules are oriented obliquely to the substrate in the gray-level display as mentioned above, the area of a large visual angle dependence in the pixel region is reduced, and consequently, the average visual angle dependence of the entire pixel region can be reduced.

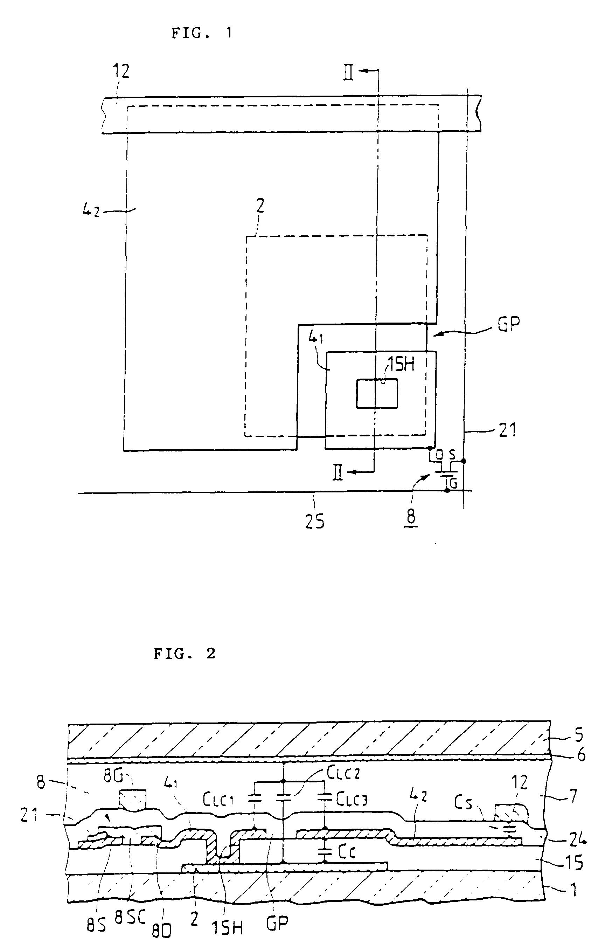

With the pixel structure disclosed in the U.S. patent, however, the subpixel electrodes are each separated by a gap or region to which no voltage can be applied, i.e. a region which does not contribute to the display -- this reduces the aperture ratio accordingly. With a view to overcoming this defect, the inventors of the subject application propose, in their prior U.S. Patent Application Serial No. 07/733,177 filed July 19, 1991 (corresponding to Japanese Patent Application No. 194632/90, filed July 23, 1990 and laid open to public inspection in January, 1992), a pixel structure wherein subpixel electrodes and a control capacitor electrode are formed so that they cover the gap between the subpixels and overlap the subpixels over desired areas, one of the subpixel electrodes and the control capacitor electrode are connected through a contact hole made in an insulating layer and the drive voltage is applied directly to the said one subpixel electrode to apply substantially equal voltage to the liquid crystal in the subpixel and the gap region, thereby providing for increased aperture ratio of the pixel. The pixel electrode will be described with reference to Figs. 1 and 2.

Fig. 1 is a plan view showing one pixel region of a liquid crystal display panel of the type having pixels arranged in a matrix form, and Fig. 2 is a sectional view taken on the line II-II in Fig. 1. Reference numeral 1 indicates a transparent substrate as of transparent glass, on the interior surface of which there is formed a control capacitor electrode 2, which is, in turn, covered with an insulating layer 15 deposited almost all over the interior surface of the substrate 1. On the top of the insulating layer 15 there is formed a subpixel electrode $4_2$ with one corner of the pixel region cut off in a square form, and in the void area there is provided a rectangular subpixel electrode $4_1$ separated by a gap GP from the subpixel electrode $4_2$. The insulating layer 15 has a contact hole 15H made therethrough substantially at the center of the subpixel electrode $4_1$, the control capacitor electrode 2 and the subpixel electrode $4_1$ being interconnected through the contact hole 15H. Reference numeral 8 denotes a symbol indicating a thin film transistor provided near the subpixel electrode $4_1$. In Fig. 2 its construction is shown in section.

A gate insulating film 24 of the transistor 8 is deposited substantially all over the interior surface of the substrate 1, covering the pixel electrodes $4_1$ and $4_2$ and a semiconductor layer 8SC of the transistor 8. The transistor 8 has its source electrode 8S and gate electrode 8G connected to a source line 21 and a gate line 25 shown symbolically in Fig. 1, respectively. Reference numeral 5 represents a transparent substrate as of transparent glass, which is coated all over its interior surface with a common electrode 6. Reference numeral 12 denotes a strip-like additional capacitor electrode, which is deposited opposite a part of the subpixel electrode $4_2$ with the gate insulating film 24 sandwiched between them. The additional capacitor electrodes 12 of all pixels are supplied with a common potential. Between the common electrode 6 and the gate insulating film 24 there is sealed liquid crystal 7. Incidentally, the control capacitor electrode 2, the subpixel electrodes $4_1$, $4_2$ and the common electrode 6 are transparent electrodes as of ITO. The subpixel electrode $4_1$ has connected thereto a drain electrode 8D of the thin film transistor 8 provided in its vicinity and a voltage Va corresponding to the picture signal level is applied to the subpixel electrode $4_1$ via the drain electrode 8D.

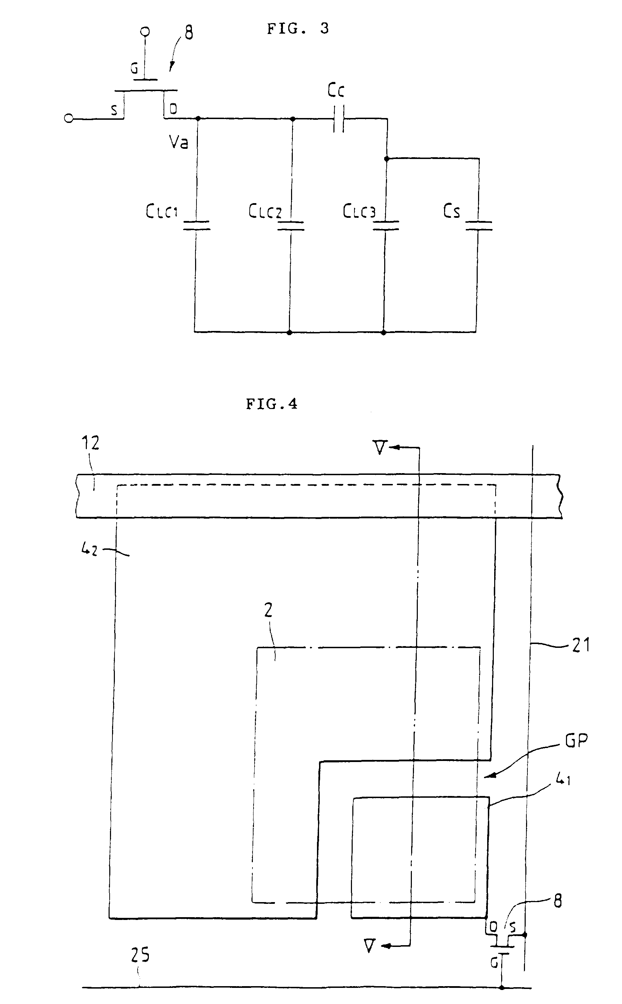

The pixel of such a construction as depicted in Figs. 1 and 2 is composed of a subpixel formed by the subpixel electrode $4_1$ and the gap region GP of the control capacitor electrode 2 connected thereto, and a subpixel formed by the subpixel electrode $4_2$. As shown in Fig. 2, liquid crystal capacitors $C_{LC1}$, $C_{LC3}$ and $C_{LC2}$ are formed between the common electrode 6 and the subpixel electrodes $4_1$, $4_2$ and the control capacitor electrode 2, respectively, a control capacitor electrode $C_C$ is formed between the control capacitor electrode 2 and the subpixel electrode $4_2$, and an additional capacitor $C_S$ is formed between the additional capacitor electrode 12 and the subpixel electrode $4_2$. Fig. 3 shows an equivalent circuit of the pixel depicted in Fig. 1.

The drive voltage Va supplied via the drain electrode 8D of the thin film transistor 8 is applied intact to the subpixel electrode $4_1$, whereas the subpixel electrode $4_2$ is supplied with a voltage divided by the sum of the capacitances of the liquid capacitor $C_{LC3}$ and the additional capacitor $C_S$ and the capacitance of the control capacitor $C_C$. This capacitance-divided voltage is controlled by suitably selecting the capacitance value of the control capacitor $C_C$, i.e. the overlapping area of the subpixel electrode $4_2$ and the control capacitor electrode 2, and the area of the additional capacitor electrode 12. The liquid crystal panel has a threshold voltage at which the transmission of light begins (i.e. the panel is turned ON) and a voltage at which the transmission of light is saturated. By gradually increasing the drive voltage Va from a low starting voltage, the transmission of light through the regions of the subpixel $4_1$ and the gap GP begins (i.e. these regions are turned ON) at a certain threshold voltage, and by further increasing the voltage Va, the quantity of light that is transmitted through the regions gradually increases. By further increasing the drive voltage Va, the region of the subpixel $4_2$ is also turned ON and the transmission therethrough of light is finally saturated, that is, all pixel regions enter the state in which the quantity of light passing therethrough is maximum. By changing the voltage to be applied to each subpixel electrode through such control of drive voltage Va, a gray-scale display can be produced.

The liquid crystal display panel of the prior application, shown in Figs. 1 and 2, adopts the construction in which the drive voltage Va is applied directly to the subpixel electrode $4_1$ via the thin film transistor 8 and the subpixel electrode $4_1$ is connected directly to the control capacitor electrode 2 through the contact hole 15H made in the insulating layer 15. In the case where two subpixel electrodes are used as in the above-mentioned example, if the control capacitor electrode 2 and the subpixel electrode $4_2$ are shorted, the subpixel electrode $4_2$ is also supplied with the same drive voltage Va as that applied to the subpixel electrode $4_1$. Hence, even if a drive voltage is applied which causes, for example, the subpixel electrode $4_1$ and the gap region GP to produce a gray-level display, the display is provided at the same level over the entire region of the pixel, including the subpixel electrode $4_2$. In this case, the quantity of light passing through the pixel is larger than in the case of no short occurring between the above-mentioned electrodes and the pixel is perceived defective rather than normal. In addition, since the liquid crystal molecules are oriented obliquely over the entire region of the pixel, the visual angle dependence of the liquid crystal display panel increases, and when the display panel is applied to a color display, the pixel becomes a defective pixel which clearly differs in color and saturation than in the case where no short occurs.

The above description has been given of the light transmitting type liquid crystal display panel but the same is true of a reflecting type liquid crystal display panel wherein the subpixel electrodes $4_1$, $4_2$ and the control capacitor electrode 12 are formed by metal layers.

It is therefore an object of the present invention to provide a gray-scale liquid crystal display panel which has display pixels of a large aperture ratio.

Another object of the present invention is to provide a gray-level liquid crystal display panel which has display pixels which permits that the visual angle dependence does not appreciably increase even if one of the subpixel electrodes and the control capacitor electrode are shorted.

Reference is also made to EP-A-0 493 798, which is a non pre-published reference within the meaning of Article 54(3) EPC. This reference discloses (according to Figures 7a, 7b, and 7c) a gray-scale liquid crystal display panel having pixels arranged in matrix form, each having a thin film transistor (TFT) connected thereto and an equivalent circuit comprising a plurality of parallel branches connected to the drain of the TFT and each including at least one capacitor, and a single series-connected capacitor between two parallel branches.

According to the invention, there is provided a gray-scale liquid crystal display panel wherein first and second transparent substrates are disposed in parallel with liquid crystal interposed therebetween, said first substrate has on its interior surface pixels arranged in a matrix form of rows and columns, a plurality of thin film transistors connected to said pixels, respectively, source lines connected to sources of said thin film transistors of each column of said matrix to apply thereto a drive voltage and gate lines connected to gates of said thin film transistors of each row of said matrix to apply thereto a gate signal for ON-OFF control thereof, and said second substrate is coated all over its interior surface with a transparent common electrode opposite all of said pixels, each of said pixels comprising: a transparent insulating layer formed on said first substrate, at least first and second subpixel electrodes formed on one side of said insulating layer, said first and second subpixel electrodes being separated by a gap (GP), at least one control capacitor electrode formed on the other side of said insulating layer, covering substantially the entire area of said gap and overlapping said first and second subpixel electrodes across said insulating layer over predetermined areas thereof to form two control capacitors connected in series between said first and second subpixel electrodes, a drain electrode of each of said thin film transistors corresponding to said each pixel being connected directly to said first subpixel electrode.

With such a pixel structure as mentioned above, the afore-mentioned capacitance-divided voltage can be applied to the control capacitor electrode and the gap region between the subpixel electrodes can also be made to contribute to producing a display; hence, the aperture ratio of each pixel increases accordingly. Moreover, even if a short occurs between either one of the two subpixel electrodes and the control capacitor electrode, the subpixel electrodes can be driven stepwise because they are capacitively connected to each other by the other control capacitor, and the visual angle dependence does not appreciably increase.

The invention will be better understood by referring, by way of example, to the accompanying drawings, wherein:-

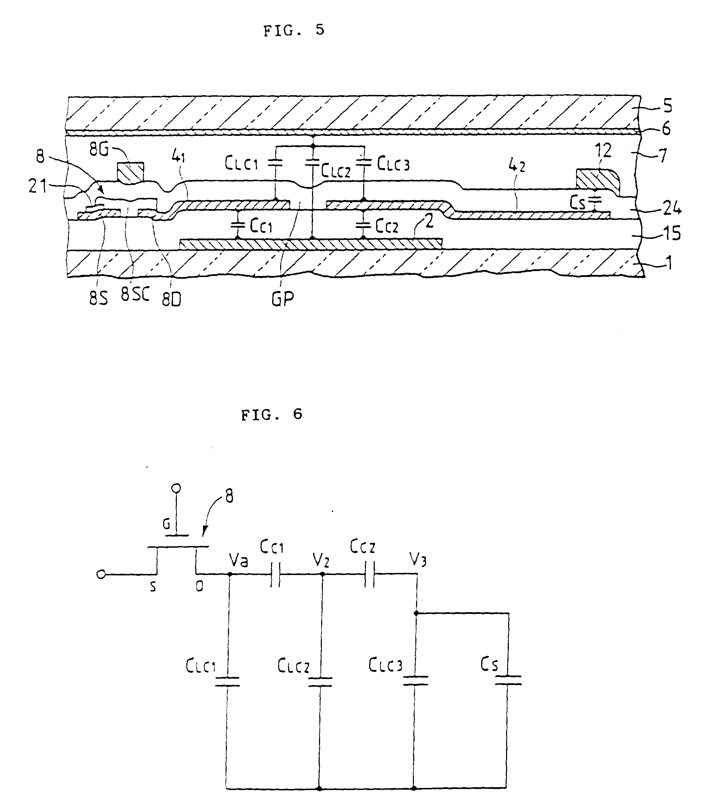

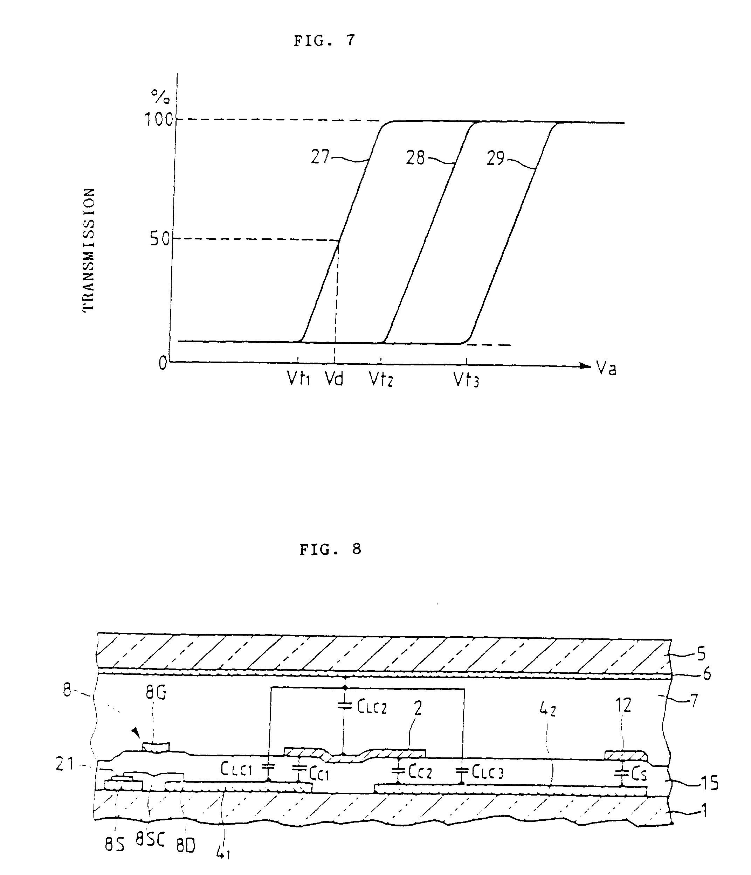

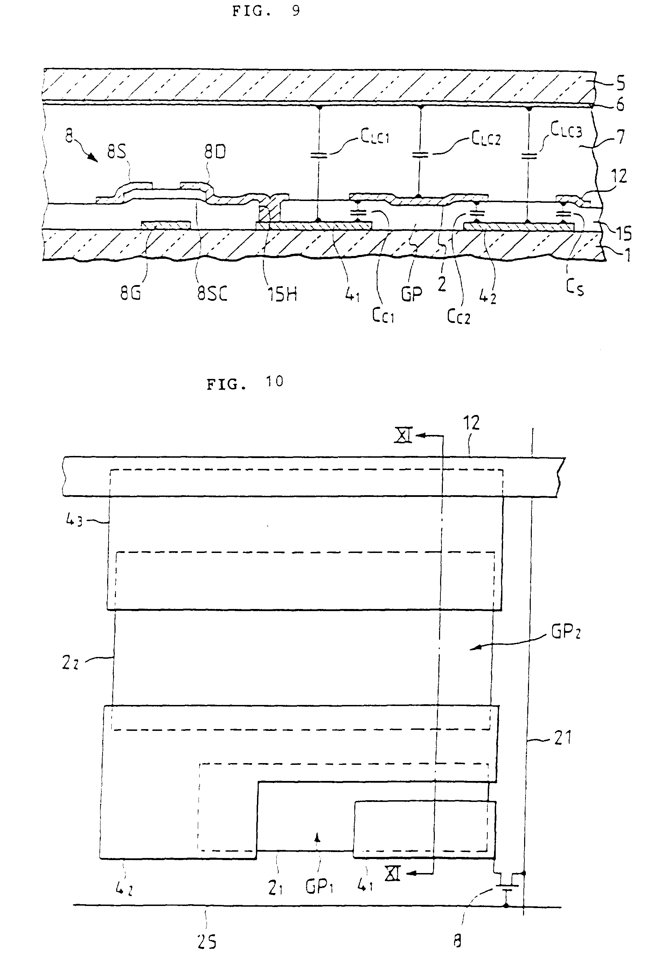

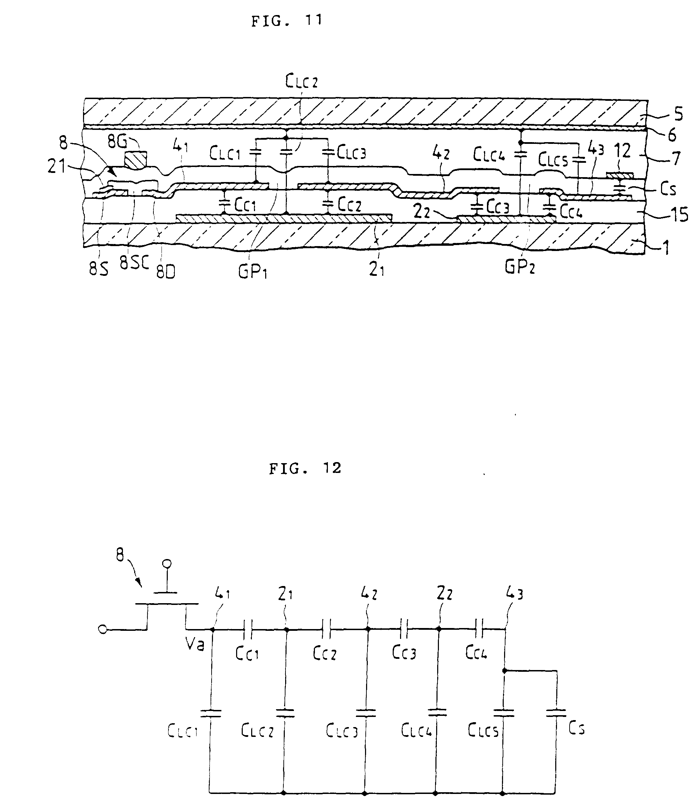

Fig. 1 is a plan view of a pixel region composed of a plurality of subpixels and capable of producing a gray-scale display; Fig. 2 is a sectional view taken on the line II-II in Fig. 1; Fig. 3 shows an equivalent circuit of the pixel depicted in Fig. 1; Fig. 4 is a plan view illustrating the pixel structure of the liquid crystal display panel according to the present invention; Fig. 5 is a sectional view taken on the line V-V in Fig. 4; Fig. 6 is a diagram showing an equivalent circuit of each pixel of the liquid crystal display panel according to the present invention; Fig. 7 is a graph for explaining an example of the light transmittance characteristic of each liquid crystal capacitor with respect to the drive voltage $V_a$ in the pixel depicted in Figs. 4 and 5; Fig. 8 is a sectional view, corresponding to Fig. 5, illustrating a modified form of the Fig. 5 embodiment; Fig. 9 is a sectional view illustrating a modification of the Fig. 8 structure which employs what is called a gate bottom type thin film transistor; Fig. 10 is a plan view of one pixel in another embodiment of the present invention; Fig. 11 is a sectional view taken on the line XI-XI in Fig. 10; and Fig. 12 is a diagram showing an equivalent circuit of the pixel depicted in Fig. 10.

Referring now to Figs. 4 and 5, an embodiment of the present invention will be described. Fig. 4 is a plan view of one pixel region in a liquid crystal display panel provided with display pixels arranged in a matrix form, and Fig. 5 a sectional view taken on the line V-V in Fig. 4. Reference numeral 1 indicates a transparent substrate as of transparent glass. On the interior surface of the transparent substrate 1 there is formed at one corner of a rectangular pixel a rectangular control capacitor electrode 2 smaller than the pixel, and the control capacitor electrode 2 is covered with a first insulating layer 15 coated almost all over the interior surface of the substrate 1. On the top of the insulating layer 15 there are deposited subpixel electrodes $4_1$ and $4_2$ separated by a gap GP. The control capacitor electrode 2 covers substantially the entire area of the gap GP and predetermined areas of the subpixel electrodes $4_1$ and $4_2$, forming control capacitors $C_{C1}$ and $C_{C2}$ between the control capacitor electrode 2 and the subpixel electrodes $4_1$ and $4_2$, respectively.

A source electrode 8S of each thin film transistor 8, a source line 21 for interconnecting the source electrodes 8S of the thin film transistors 8 of each column, a drain electrode 8D of each thin film transistor 8 connected to the subpixel electrode $4_1$, and a semiconductor layer 8SC are formed on the same side of the first insulating layer 15 as the side where the subpixel electrodes $4_1$ and the $4_2$ are provided. A second insulating layer 24 is deposited almost all over the interior surface of the substrate 1, covering them. The second insulating layer 24 is used also as a gate insulating film common to all of the thin film transistors 8. On the gate insulating film 24 there are formed a gate electrode 8G facing the semiconductor layer 8SC, a strip-like additional capacitor electrode 12 extending along the marginal portion of the subpixel electrode $4_2$, and a gate line 25 for interconnecting the gate electrodes 8G of the thin film transistors 8 of each row. The additional capacitor electrode 12 constitutes an additional or supplemental capacitor $C_S$ between it and the subpixel electrode $4_2$. A transparent substrate 5, facing the substrate 1 across liquid crystal 7 sealed in the space defined therebetween, is coated over the entire area of its inside surface with a transparent common electrode 6. Consequently, liquid crystal capacitors $C_{LC1}$ and $C_{LC2}$ are formed between the subpixel electrodes $4_1$ and $4_2$ and the common electrode 6, respectively, and another liquid crystal capacitor $C_{LC3}$ is formed between the control capacitor electrode 2 and the common electrode 6 in the gap region GP. The control capacitor electrode 2, the subpixel electrodes $4_1$ and $4_2$, the common electrode 6 and the additional capacitor electrode 12 are transparent electrodes made of ITO, for instance.

In this embodiment, such a contact hole 15H as referred to previously with respect to the pixel of Fig. 1 is not made in the first insulating layer, but instead the drain electrode 8D of the thin film transistor 8 is connected directly to the subpixel electrode $4_1$ and the control capacitor electrode 2 and the subpixel electrode $4_1$ are capacitively coupled by the control capacitor $C_{C1}$ formed between them. Hence, the equivalent circuit of the pixel shown in the embodiment of Figs. 4 and 5 is such as depicted in Fig. 6, wherein the liquid crystal capacitors $C_{LC1}$, $C_{LC2}$ and $C_{LC3}$ are connected to the drain D of the thin film transistor 8 directly, via the control capacitor $C_{C1}$, and via the control capacitors $C_{C1}$ and $C_{C2}$, respectively. Thus, the drive voltage Va which is provided via the thin film transistor 8 is applied intact across the liquid crystal capacitor $C_{LC1}$. Setting $C_{LC3}' = C_{LC3} + C_S$, the liquid crystal capacitor $C_{LC2}$ is supplied with a voltage $V_2$ resulting from the capacitance division of the voltage Va, expressed by the following equation:

$$V_2 = \frac{\dfrac{C_{LC3}'}{C_{C2}} + 1}{(\dfrac{C_{LC2}}{C_{C1}} + 1)\,(\dfrac{C_{LC3}'}{C_{C2}} + 1) + \dfrac{C_{LC3}}{C_{C1}}}\, Va \qquad (1)$$

The liquid crystal capacitor $C_{LC3}$ is supplied with a voltage $V_3$ resulting from the capacitance division of the thus divided voltage $V_2$, expressed by the following equation:

$$V_3 = \frac{1}{(\dfrac{C_{LC2}}{C_{C1}} + 1)\,(\dfrac{C_{LC3}'}{C_{C2}} + 1) + \dfrac{C_{LC3}}{C_{C1}}}\, Va \qquad (2)$$

Accordingly, the applied voltages decrease one after another. That is, in this pixel the region of the gap GP of the control capacitor electrode 2 forming the liquid crystal capacitor $C_{LC2}$ also functions as a subpixel --this structure is equivalent to a structure in which one pixel is divided into three subpixels. Incidentally, the respective additional capacitor electrodes 12 are supplied with a common fixed potential via a line not shown, the additional capacitor $C_S$ is connected in parallel to the liquid crystal capacitor $C_{LC3}$ equivalently. An additional or supplemental capacitance $C_S$ is provided to increase the amount of charges stored in each pixel to lengthen the time for which the pixel remains in the display state.

The areas over which the control capacitor electrode 2 overlaps the subpixel electrodes $4_1$ and $4_2$ (and consequently the capacitances of the control capacitors $C_{C1}$ and $C_{C2}$) are determined so that operations curves, each showing the quantity of light transmitted one of the liquid crystal capacitors $C_{LC}$ (the saturated quantity of transmitted light being indicated by 100%), bear such relationships as depicted in Fig. 7. That is, the above-said overlapping areas are selected such that when a voltage $V_{t2}$, indicated by the curve 27, is applied at which the quantity of light transmitted through the liquid crystal capacitor $C_{LC1}$ is saturated, the quantity of transmitted light through the liquid crystal capacitor $C_{LC2}$ rises as indicated by the curve 28, and when a voltage $V_{t3}$, indicated by the curve 28, is applied at which the quantity of transmitted light through the liquid crystal capacitor $C_{LC2}$ is saturated, the quantity of transmitted light through the liquid crystal capacitor $C_{LC3}$ rises as indicated by the curve 29.

Let it be assumed, for example, in the Fig. 4 embodiment that a voltage Vd, at which the quantity of transmitted light is intermediate between its rise and saturation, for example, 50%, is being applied as the drive voltage Va to the subpixel electrode $4_1$ from the thin film transistor 8. In this instance, the liquid crystal molecules are oriented obliquely to the substrates in the region corresponding to the subpixel electrode $4_1$, whereas in the regions corresponding to the gap GP and the subpixel electrode $4_2$ the liquid crystal molecules are oriented parallel to the substrates. As is evident from the equivalent circuit depicted in Fig. 6, when the control capacitor, for example, $C_{C1}$, is shorted, the voltage Vd is applied to the liquid crystal capacitor $C_{LC2}$ as well, and the voltage $V_3'$, which is applied to the liquid crystal capacitor $C_{LC3}$ is expressed as follows, by substituting infinity for $C_{C1}$ in Eq. (2).

$$V_3' = \frac{Va}{\dfrac{C_{LC3}'}{C_{C2}} + 1} \qquad (3)$$

Since the voltage $V_2$ which is applied to the liquid crystal capacitor $C_{LC2}$ becomes equal to the voltage Va, the operation curve 28 in Fig. 7 shifts to the position of the operation curve 27. Since the voltage $V_3'$ which is applied to the liquid crystal capacitor $C_{LC3}$ becomes higher than the voltage $V_3$ in the case of no short, as seen from Eq. (3), the operation curve 29 in Fig. 7 shifts to the vicinity of the curve 28. Thus, although the liquid crystal molecules are oriented obliquely in the region corresponding to the gap GP as well, the liquid crystal molecules are still oriented in parallel to the substrates in the region corresponding to the subpixel electrode $4_2$, because the voltage $V_3'$ which is provided to the subpixel electrode $4_2$ can be controlled to stay below the thresh-

old voltage $V_{t2}$. In this way, the area over which the liquid crystal molecules are oriented obliquely to the substrates increases, and consequently, the quantity of transmitted light over the entire pixel region increases accordingly, but it is possible to prevent the liquid crystal molecules from being oriented obliquely over the entire region of the pixel. In other words, the reduction of the optimum visual angle and an increase in the quantity of transmitted light, which are caused by shorting of the control capacitor, are less than in the case of Fig. 1.

When the control capacitor $C_{C2}$ is shorted, the liquid crystal capacitors $C_{LC2}$ and $C_{LC3}$ are connected in parallel as seen from Fig. 6, and a voltage $V_3''$ which is provided to the liquid crystal capacitor $C_{LC3}$ is given as follows, by substituting infinity for $C_{C2}$ in Eq. (2).

$$V_3'' = \frac{Va}{\frac{C_{LC2} + C_{LC3}'}{C_{C1}} + 1} \qquad (4)$$

As is evident from Eq. (4), the voltage $V_3''$ becomes higher than the voltage $V_3$ in the case of no short-circuit, and in this case, the operation curve 29 in Fig. 7 shifts to the vicinity of the curve 28 (which also slightly shifts to right), but since the voltage $V_3''$ which are provided to the subpixel electrode $4_2$ and the control capacitor electrode 2 still remain below the threshold voltage $V_{t2}$, the display in these regions will not change.

When viewed from the outside of the optimum visual angle, the lightness and contrast of a display on the liquid crystal display panel differ from the lightness and contrast of the display viewed from the inside of the optimum visual angle. In a liquid crystal display panel adapted for color display (in which pixels are each provided with red, green and blue color filters), the above-said change in lightness and contrast appears as a change in the color and saturation of the display, in particular, and hence is remarkably noticeable. Hence, in such a liquid crystal display panel of our prior application as shown in Fig. 1, a short of the control capacitor changes the color and saturation of the display over the entire pixel region, and this is recognized as an apparent pixel defect. In contrast thereto, for example, in the Fig. 4 embodiment, even if one of the control capacitor is shorted, the subpixel electrodes $4_1$ and $4_2$ are capacitively coupled by the other control capacitor. As the result of the short, the control capacitor electrode 2 and one of the subpixel electrodes $4_1$ and $4_2$ are connected and the area of the subpixel electrode increases equivalently. In the gray-level display, however, the region over which the liquid crystal molecules are oriented obliquely is either one of the subpixel electrode of the increased area and the other subpixel electrode, and there is less possibility that the liquid crystal molecules are oriented obliquely over the entire pixel region. Thus, the visual angle dependence of the display is small accordingly, and even if the panel is applied to a color display, changes in the color and saturation are small accordingly. Moreover, in the embodiment of Figs. 4 and 5 the drain electrode 8D of the thin film transistor 8 and the subpixel electrode $4_1$ are formed in the same plane on the insulating layer 15 and are connected directly to each other -- this precludes the necessity of making such a contact hole as shown in Fig. 2 in the insulating layer 15, and hence reduces the number of steps involved in the manufacture of the liquid crystal display panel accordingly.

While in the above embodiment the control capacitor electrode 2 is provided on the side of the first insulating layer 15 near the substrate 1 and the subpixel electrodes $4_1$ and $4_2$ are on the other side of the first insulating layer 15 opposite from the substrate 1, their positions may also be exchanged as shown in section in Fig. 8 corresponding to Fig. 5. That is, in the Fig. 8 embodiment the electrodes 2, $4_1$ and $4_2$ are identical in shape with those in Fig. 4 embodiment, but the subpixel electrodes $4_1$ and $4_2$ are deposited on the inside of the substrate 1 and the source and drain electrodes 8S and 8D of the thin film transistor 8 are also formed on the same interior surface of the substrate 1 as the subpixel electrodes $4_1$ and $4_2$ are provided, the drain electrode 8D being connected directly to the subpixel electrode $4_1$. The first insulating layer 15 serves also as the gate insulating film of the thin film transistor 8. On the top of the first insulating layer 15 there are deposited the control capacitor electrode 2, the gate electrode 8G of the thin film transistor 8 and the additional capacitor electrode 12. In this embodiment the entire region of the control capacitor electrode 2 function as one subpixel electrode, but as in the embodiment of Figs. 4 and 5, the control capacitor 2 connects the subpixel electrodes $4_1$ and $4_2$ in series to each other via the control capacitors $C_{C1}$ and $C_{C2}$. Hence, the equivalent circuit of the pixel is the same as shown in Fig. 6 and the same results as those obtainable with the embodiment of Figs. 4 and 5 can be obtained.

(A) Although the foregoing embodiment have each been described to employ what is called a gate top type thin film transistor, it is evident that a so-called gate bottom type thin film transistor may also be used. Fig. 9 shows, in section, an example in which the gate bottom type thin film transistor is used in the structure of the Fig. 8 embodiment, the parts corresponding to those in Fig. 8 being identified by the same reference numerals and characters. As depicted in Fig. 9, the gate electrode 8D of the thin film transistor 8 is formed between the substrate and the insulating layer 15 in the same manner as the subpixel electrodes $4_1$ and $4_2$, and the semiconductor layer 8SC is formed on the insulating layer 15 in opposing relation to the gate electrode 8G, the insulating layer 15 serving also as a gate insulating film. Further, the source electrode 8S and the drain electrode 8D are formed partly overlapping opposite marginal portions of the semiconductor layer 8SC, and the drain electrode 8D is connected to the subpixel electrode $4_1$

through the contact hole 15H made in the insulating layer 15. The display panel of this example is identical in construction with the Fig. 8 embodiment except the above. The control capacitor electrode 2 is formed on the insulating layer 15 so that it covers the entire area of the gap GP and overlaps the subpixels $4_1$ and $4_2$ over predetermined areas. Thus, the equivalent circuit of the pixel in this example is the same as shown in Fig. 6, as is the case with the Fig. 8 embodiment, and it is evident that the construction of this example brings about the same effect obtainable with the embodiment depicted in Figs. 4 and 5. It is also possible, in this embodiment, to form the control capacitor electrode 2 between the insulating layer 15 and the substrate 1 and provide the subpixel electrodes $4_1$ and $4_2$ on the insulating layer 15, as in the case of Fig. 5 embodiment. In such a case, the contact hole 15H need not be made in the insulating layer 15 and the drain electrode 8D can be connected directly to the subpixel electrode $4_1$, and consequently, the number of manufacturing steps of the display panel decreases accordingly.

Although in the above the present invention has been described as being applied to the pixel structure which can be driven at three levels one after another through use of the two subpixel electrodes $4_1$ and $4_2$ and the one control capacitor electrode 2, it is also possible to increase the number of pixel driving levels by using more control capacitor electrodes and subpixel electrodes on the basis of the principle of the present invention. Figs. 10 and 11, corresponding to Figs. 4 and 5, illustrate another embodiment which employs two control capacitor electrodes and three subpixel electrodes in the pixel structure shown in Figs. 4 and 5, and Fig. 12 shows its equivalent circuit. In this embodiment subpixel electrodes $4_1$, $4_2$ and $4_3$ are separated by gap regions $GP_1$ and $GP_2$, respectively, and control capacitor electrodes $2_1$ and $2_2$ are provided which cover the gap regions $GP_1$ and $GP_2$ and overlap adjacent subpixel electrodes over desired areas across the first insulating layer 15. With this structure, the subpixel electrodes $4_1$, $4_2$ and $4_3$ are capacitively coupled in parallel via control capacitors $C_{C1}$, $C_{C2}$, $C_{C3}$ and $C_{C4}$ one after another, forming liquid crystal capacitors $C_{LC1}$, $C_{LC3}$ and $C_{LC5}$ between the, and the common electrode 6 opposite thereto, respectively. The control capacitor electrodes $2_1$ and $2_2$ also form liquid crystal capacitors $C_{LC2}$ and $C_{LC4}$ between them and the common electrode 6 in the gap regions $GP_1$ and $GP_2$, respectively. As can be seen from the equivalent circuit depicted in Fig. 12, the drive voltage Va, which is applied via the thin film transistor 8, is provided directly to the liquid crystal capacitor $C_{LC1}$ and sequentially lower voltages, which are provided by the capacitance division of the drive voltage Va, are applied to the liquid crystal capacitors $C_{LC2}$ through $C_{LC5}$, respectively. This permits driving of the pixel region at five levels. It can readily be understood that the capacitance-divided voltages, which are applied to the liquid crystal capacitors $C_{LC2}$ through $C_{LC5}$, can be chosen as desired by a suitable selection of the areas of the subpixel electrodes overlapping the control capacitors $2_1$ and $2_2$.

While in the above the present invention has been described as being applied to the light transmitting type liquid crystal display panel, it will be seen that the invention is also applicable to a light reflecting type liquid crystal panel wherein each control capacitor electrode and each subpixel electrode are formed by metal layers.

As is evident from the above, according to the present invention, a plurality of subpixel electrodes, separated by a gap region, are provided on one side of an insulating layer and at least one control capacitor electrode is provided on the other side of the insulating layer in such a manner that it covers the gap region and overlaps the adjacent but spaced subpixel electrodes over predetermined areas thereof. Moreover, the entire pixel region is covered with the subpixel electrodes and the control capacitor electrode. Thus, the entire pixel region functions as a display-enable region, and hence this pixel structure has a high aperture ratio.

As can be seen from comparison of the structures shown, for example, in Figs. 5 and 8, there is no substantial distinction between the subpixel electrodes and the control capacitor electrodes in the present invention. The most striking feature of the present invention resides in the construction wherein a plurality of series-connected control capacitors are provided and a liquid crystal capacitor is connected to one end of each control capacitor, as depicted in the equivalent circuit of Fig. 6 or 12. This construction differs entirely from the construction set forth in the afore-mentioned U.S. patent which is represented by an equivalent circuit wherein a plurality of series-connected pairs of control capacitors and liquid crystal capacitors are connected in parallel.

**Claims**

1. A gray-scale liquid crystal display panel wherein first and second transparent substrates (1 and 5) are disposed in parallel with liquid crystal (7) interposed therebetween, said first substrate has on its interior surface pixels arranged in a matrix form of rows and columns, a plurality of thin film transistors (8) connected to said pixels, respectively, source lines (21) connected to sources (8S) of said thin film transistors of each column of said matrix to apply thereto a drive voltage and gate lines (12) connected to gates (8G) of said thin film transistors of each row of said matrix to apply thereto a gate signal for ON-OFF control thereof, and said second substrate (5) is coated all over its interior surface with a transparent common electrode (6) opposite all of said pixels, each of said pixels comprising:

   a transparent insulating layer (15) formed on said first substrate;

at least first and second subpixel electrodes ($4_1$, $4_2$) formed on one side of said insulating layer, said first and second subpixel electrodes being separated by a gap (GP);

at least one control capacitor electrode (2) formed on the other side of said insulating layer (15), covering substantially the entire area of said gap and overlapping said first and second subpixel electrodes across said insulating layer over predetermined areas thereof to form two control capacitors ($C_{C1}$, $C_{C2}$) connected in series between said first and second subpixel electrodes;

a drain electrode (8D) of each of said thin film transistors corresponding to said each pixel being connected directly to said first subpixel electrode ($4_1$).

2. The display panel of claim 1 wherein said drain electrode (8D) of said thin film transistor corresponding to said each pixel is formed on the same side of said insulating layer (15) as the side where said first and second subpixel electrodes ($4_1$, $4_2$) are provided.

3. The display panel of claim 1 wherein said drain electrode (8D) of said thin film transistor corresponding to said each pixel is formed on said insulating layer (15) at the side opposite from said first and second subpixel electrodes ($4_1$, $4_2$), and said drain electrode (8D) is connected to said first subpixel electrode ($4_1$) through a contact hole (15H) made in said insulating layer (15).

4. The display panel of claim 1 wherein said thin film transistors share, as their gate insulating films, said insulating layer (15) formed all over the inside of said first substrate (1).

5. The display panel of claim 1 wherein said first and second subpixel electrodes ($4_1$, $4_2$) of said each pixel are formed on the side of said insulating layer (15) near said first substrate (1).

6. The display panel of claim 1 wherein said control capacitor electrode (2) of said each pixel is formed on the side of said insulating layer (15) near said first substrate (1).

7. The display panel of claim 1 wherein another control capacitor electrode ($2_2$) is formed on the same side of said insulating layer (15) as the side wherein said control capacitor electrode ($2_1$) is provided, and said another control capacitor electrode (22) is spaced apart from said control capacitor electrode ($2_1$) and has a region overlapping said second subpixel electrode ($4_2$) over a predetermined area.

**Patentansprüche**

1. Grauskalen-Flüssigkristallanzeigetafel, in welcher ein erstes und zweites transparentes Substrat (1, 5) parallel zu einem dazwischen angeordneten Flüssigkristall (7) angeordnet sind, wobei das erste Substrat auf seiner Innenseite Oberflächenpixel in einer Matrixform mit Reihen und Spalten angeordnet hat, mehrere Dünnfilmtransistoren (8) jeweils mit den Pixeln verbunden sind, Sourceleitungen (21) mit den Sourceelektroden (8S) der Dünnfilmtransistoren jeder Spalte der Matrix verbunden sind, um daran eine Treiberspannung anzulegen, und Gateleitungen (12) mit den Gateelektroden (8G) der Dünnfilmtransistoren jeder Zeile der Matrix verbunden sind, um dadurch ein Gatesignal für deren EIN/AUS-Steuerung anzulegen, und das zweite Substrat (5) über seiner gesamten Innenoberfläche mit einer transparenten gemeinsamen Elektrode (6) gegenüber allen Pixeln beschichtet ist, wobei jedes der Pixel aufweist:

eine transparente Isolationsschicht (15), ausgebildet auf dem ersten Substrat;

mindestens eine erste und zweite Subpixelelektrode ($4_1$, $4_2$), ausgebildet auf einer ersten Seite der Isolationsschicht, wobei die erste und zweite Subpixelelektrode durch einem Spalt (GP) getrennt sind;

mindestens eine Steuerkondensatorelektrode (2), ausgebildet auf der anderen Seite der Isolationsschicht (15), welche im wesentlichen die gesamte Fläche des Spalts abdeckt und die erste und zweite Subpixelelektrode über der Isolationsschicht über vorgegebenen Bereichen davon überlappt, um zwei zwischen der ersten und zweiten Subpixelelektrode in Reihe geschaltete Steuerkondensatoren ($C_{C1}$, $C_{C2}$) auszubilden;

wobei eine Drainelektrode (8D) jedes der den jeweiligen Pixeln entsprechenden Dünnfilmtransistoren direkt mit der ersten Subpixelelektrode ($4_1$) verbunden ist.

2. Anzeigetafel nach Anspruch 1, wobei die Drainelektrode (8D) des jedem Pixel entsprechenden Dünnfilmtransistor 8 auf derselben Seite der Isolationsschicht (15) wie der Seite ausgebildet ist, wo die erste und zweite Subpixelelektrode ($4_1$, $4_2$) vorgesehen sind.

3. Anzeigetafel nach Anspruch 1, wobei die Drainelektrode (8D) des jedem Pixel entsprechenden Dünnfilmtransistor 8 auf der Isolationsschicht (15) an der Seite gegenüber der ersten und zweiten Subpixelelektrode ($4_1$, $4_2$) ausgebildet ist, und die Drainelektrode (8D) mit der ersten Subpixelelektrode ($4_1$) über ein der Isolationsschicht (15) ausgebildetes Kontaktloch (15H) verbunden ist.

4. Anzeigetafel nach Anspruch 1, wobei sich die Dünnfilmtransistoren als ihren Gate-Isolationsfilm die über die gesamte Innenseite des ersten Substrats (1) ausgebildete Isolationsschicht (15) teilen.

5. Anzeigetafel nach Anspruch 1, wobei die erste und zweite Subpixelelektroden $4_1$ und $4_2$ jedes einzelnen Pixels auf der nahe dem ersten Substrat (1) befindlichen Seite der Isolationsschicht (15) ausgebildet sind.

6. Anzeigetafel nach Anspruch 1, wobei die Steuerkondensatorelektrode (2) jedes einzelnen Pixels auf der nahe dem ersten Substrat (1) befindlichen Seite der Isolationsschicht (15) ausgebildet.

7. Anzeigetafel nach Anspruch 1, wobei eine weitere Steuerkondensatorelektrode $(2_2)$ auf derselben Seite der Isolationsschicht (15) wie der Seite ausgebildet ist, auf welcher die Steuerkondensatorelektrode $(2_1)$ vorgesehen ist, und die weitere Steuerkondensatorelektrode $(2_2)$ von der ersten Steuerkondensatorelektrode $(2_1)$ beabstandet ist und einen Bereich besitzt, der die zweite Subpixelelektrode $(4_2)$ über eine vorbestimmte Fläche überlappt.

**Revendications**

1. Tableau d'affichage à cristal liquide en échelle de gris dans lequel des premier et second substrats transparents (1 et 5) sont disposés parallèlement au cristal liquide (7) placé entre eux, ledit premier substrat comportant sur sa face intérieure des éléments d'image agencés sous forme d'une matrice en rangées et en colonnes, plusieurs transistors à couche mince (8) sont respectivement connectés auxdits éléments d'image, des lignes de source (21) sont connectées aux sources (8S) desdits transistors à couche mince de chaque colonne de ladite matrice afin de leur appliquer une tension d'attaque, et des lignes de grille (12) sont connectées aux grilles (8G) desdits transistors à couche mince de chaque rangée de ladite matrice afin de leur appliquer un signal de grille destiné à leur commande par tout ou rien, et dans lequel ledit second substrat (5) est entièrement revêtu sur sa face intérieure d'une électrode commune transparente (6) faisant face à tous lesdits éléments d'image, chacun desdits éléments d'image comprenant :

une couche isolante transparente (15) formée sur ledit premier substrat ;
au moins des première et seconde électrodes de sous-élément d'image $(4_1, 4_2)$ formées sur un côté de ladite couche isolante, lesdites première et seconde électrodes de sous-élément d'image étant séparées par un espace (GP) ;
au moins une électrode de condensateur de commande (2) formée sur l'autre côté de ladite couche isolante (15), recouvrant sensiblement toute la zone dudit espace et chevauchant lesdites première et seconde électrodes de sous-élément d'image au travers de ladite couche isolante sur des zones prédéterminées de celle-ci afin de former deux condensateurs de commande $(C_{C1}, C_{C2})$ connectés en série entre lesdites première et seconde électrodes de sous-élément d'image ;
une électrode de drain (8D) de chacun desdits transistors à couche mince correspondant à chaque dit élément d'image connectée directement à ladite première électrode de sous-élément d'image $(4_1)$.

2. Tableau d'affichage de la revendication 1, dans lequel ladite électrode de drain (8D) dudit transistor à couche mince correspondant à chaque dit élément d'image est formée du même côté de ladite couche isolante (15) que le côté sur lequel lesdites première et seconde électrodes de sous-élément d'image $(4_1, 4_2)$ sont disposées.

3. Tableau d'affichage de la revendication 1, dans lequel ladite électrode de drain (8D) dudit transistor à couche mince correspondant à chaque dit élément d'image est formée sur ladite couche isolante (15) sur le côté opposé auxdites première et seconde électrodes de sous-élément d'image $(4_1, 4_2)$, et dans lequel ladite électrode de drain (8D) est connectée à ladite première électrode de sous-élément d'image $(4_1)$ par l'intermédiaire d'un trou de contact (15H) constitué dans ladite couche isolante (15).

4. Tableau d'affichage de la revendication 1, dans lequel lesdits transistors à couche mince partagent, comme leur couches isolantes de la grille, ladite couche isolante (15) formée sur tout l'intérieur dudit premier substrat (1).

5. Tableau d'affichage de la revendication 1, dans lequel lesdites première et seconde électrodes de sous-élément d'image $(4_1, 4_2)$ de chaque dit élément d'image sont formées sur le côté de ladite couche isolante (15) à proximité dudit premier substrat (1).

6. Tableau d'affichage de la revendication 1, dans lequel ladite électrode de condensateur de commande (2) de chaque dit élément d'image est formée sur le côté de ladite couche isolante (15) à proximité dudit premier substrat (1).

7. Tableau d'affichage de la revendication 1, dans lequel une autre électrode de condensateur de commande ($2_2$) est formée sur le même côté de ladite couche isolante (15) que le côté dans lequel ladite électrode de condensateur de commande ($2_1$) est disposée, et dans lequel ladite autre électrode de condensateur de commande ($2_2$) est séparée de ladite électrode de condensateur de commande ($2_1$) et comporte une région chevauchant ladite seconde électrode de sous-élément d'image ($4_2$) sur une zone prédéterminée.

FIG. 1

FIG. 2

FIG. 3

FIG.4

FIG. 5

FIG. 6

FIG. 7

FIG. 8

FIG. 9

FIG. 10

EP 0 562 120 B1

FIG. 11

FIG. 12